# EUROPÄISCHE PATENTSCHRIFT

(11) **EP 0 936 161 B1**
(45) Veröffentlichungstag und Bekanntmachung des Hinweises auf die Patenterteilung: **02.01.2003**
(21) Anmeldenummer: 99102454.8
(22) Anmeldetag: 09.02.1999
(51) Int. Cl.: B65G 19/02

(54) **Vorrichtung zum Antreiben von Körpern entlang einer vorgegebenen Strecke**
Device for driving objects along a given path
Dispositif d'entrainement pour objets le long d'un trajet donné

(30) Priorität: 11.02.1998 CH 34198
(43) Veröffentlichungstag der Anmeldung: 18.08.1999
(73) Patentinhaber: IPT Weinfelden AG, 8570 Weinfelden (CH)
(72) Erfinder: Buechi, Robert, 8570 Weinfelden (CH)
(74) Vertreter: Frei, Alexandra Sarah

(56) Entgegenhaltungen:
- EP-A- 0 164 109
- WO-A-89/01451
- AU-B- 608 089
- FR-A- 2 213 209

## Beschreibung

Die Erfindung liegt im Gebiete der Fördertechnik und betrifft eine Vorrichtung gemäss dem Oberbegriff des ersten, unabhängigen Patentanspruchs. Die Vorrichtung dient zum Antreiben von Körpern entlang einer vorgegebenen Strecke mit Hilfe eines Zugmittels, an das die anzutreibenden Körper angekoppelt werden.

Es ist bekannt, Körper entlang von vorgegebenen Strecken anzutreiben dadurch, dass sie an ein sich im wesentlichen parallel zur vorgegebenen Strecke bewegendes Zugmittel angekoppelt werden. Ein derartiges Zugmittel ist beispielsweise eine endlose Kette, die durch teils angetriebene und teils passive Kettenräder und gegebenenfalls auch durch entsprechende Führungskanäle entlang der vorgegebenen Strecke geführt wird. Für eine Ankopplung werden Körper und Kette zusammengeführt und greifen beispielsweise an den Körpern angeordnete Zähne ("passive" Kopplungsmittel) in die Kette ein, wodurch die Körper an der Kette angekoppelt und von dieser mitgezogen werden. Damit die Ankopplung in einem derartigen System einwandfrei funktioniert, ist es notwendig, dass die Kette und die Körper in synchronisierter Art aufeinander zugeführt werden oder dass die Körper in einer vorgegebenen Position sozusagen auf das Mitgenommenwerden warten. In jedem Falle ist das Einkoppeln und Mitnehmen an einen durch die Ausgestaltung der Kette und deren Geschwindigkeit gegebenen Takt gebunden. Dasselbe gilt für "aktive" Kopplungsmittel, die für die Ankopplung an eine Zugkette in eine Kopplungsstellung oder -konfiguration gebracht werden.

Es ist auch bekannt, als Zugmittel in derselben Art, wie für eine Zugkette beschrieben, Zugseile zu verwenden. An derartige Zugseile werden die Körper durch aktive Ankopplungsmittel, beispielsweise durch entsprechende Klemmen angekoppelt. Die Klemmen werden zur Ankopplung in eine das Seil umspannende Klemmstellung gebracht, in der zwischen Klemme und Seil ein Reibschluss besteht. Für eine Entkopplung werden die Klemmen geöffnet. Systeme mit einem derartigen Zugseil-Antrieb können in einem durch andere Elemente bestimmten, auch variierenden Takt oder auch Takt-los betrieben werden, da eine Ankopplung an jeder beliebigen Seilstelle möglich ist.

Gemäss EP-0164109 wird ein derartiges Zugseil verwendet, das eine Nut aufweist. Die anzutreibenden Körper weisen je zwei Kopplungsstifte auf, die für eine Ankopplung des Körpers an das Zugseil in die Nut geschoben werden und darin durch Reibschluss gehalten werden.

Die Erfindung stellt sich die Aufgabe, eine Vorrichtung zum Antreiben von Körpern entlang einer vorgegebenen Strecke zu schaffen, welche Vorrichtung ein entlang der vorgegebenen Strecke angeordnetes Zugmittel und Kopplungsmittel zum Ankoppeln der Körper am Zugmittel aufweist Dabei soll die erfindungsgemässe Vorrichtung einfach sein und sie soll keinen Ankopplungstakt vorgeben, derart, dass sie für möglichst vielfältige Anwendungen verwendbar ist, und derart, dass sie mit möglichst vielfältigen anderen Antrieben problemlos kombinierbar ist. Zudem soll die erfindungsgemässe Vorrichtung für verschiedenste vorgegebene Strecken, das heisst für Strecken mit Steigungen, mit Kurven und/oder mit Verdrehungen in im wesentlichen unveränderter Art anwendbar sein.

Diese Aufgabe wird gelöst durch die Vorrichtung, wie sie durch die kennzeichnenden Merkmale des unabhängigen Patentanspruchs definiert ist.

Das wesentliche Merkmal der erfindungsgemässen Vorrichtung ist ein Kopplungsmittel, das aus einem ersten Kopplungsteil am Zugmittel und einem zweiten Kopplungsteil am anzutreibenden Körper besteht. Die beiden Kopplungsteile erstrecken sich an Körper und Zugmittel aufeinander abgestimmt im wesentlichen parallel zur vorgegebenen Strecke und haben über ihre Länge einen im wesentlichen gleichbleibenden Querschnitt, wobei sich der erste Kopplungsteil über die ganze, vorgegebene Strecke erstreckt und der zweite Kopplungsteil über mindestens einen Teil des anzutreibenden Körpers. Der eine Kopplungsteil ist quer zur vorgegebenen Strecke elastisch deformierbar und der andere Kopplungsteil ist derart ausgestaltet, dass er, wenn die Kopplungsteile gegeneinander gedrückt werden den elastisch deformierbaren Kopplungsteil deformiert, derart, dass zwischen den Kopplungsteilen elastische Kräfte entstehen, die quer zur vorgegebenen Strecke gerichtet sind und zwischen den Kopplungsteilen zu einer Reibung führen, durch die eine gegenseitige Verschiebung zwischen den Kopplungsteilen parallel zur vorgegebenen Strecke verhindert wird.

Für eine Ankopplung werden in einer Ankopplungsstelle Zugmittel und anzutreibender Körper derart gegeneinander geführt, dass die beiden Kopplungsteile gegeneinander gedrückt und dadurch reibschlüssig miteinander verbunden werden. Damit durch das Gegeneinander-Drücken das Zugmittel und der anzutreibende Körper nicht quer zur vorgegebenen Strecke verschoben werden, sind in der Ankopplungsstelle entsprechende Führungsmittel vorzusehen. Für die Entkopplung des Körpers vom Zugmittel werden in einer Entkopplungsstelle das Zugmittel und der anzutreibende Körper voneinander weggeführt, sodass die Kopplungsteile auseinander gezogen und dadurch voneinander getrennt werden. Auch in der Entkopplungsstelle ist durch entsprechende Führungsmittel dafür zu sorgen, dass das Zugmittel und der Körper nicht quer zur vorgegebenen Strecke verschoben werden. Dabei sind der deformierbare und der deformierende Kopplungsteil derart auszugestalten und aufeinander abzustimmen, dass die Deformation nach der Ankopplungsstelle ohne externe Kräfte aufrechterhalten wird.

Zur Erzeugung eines genügenden Reibschlusses zwischen den beiden Kopplungsteilen sind die Materialpaarung und die Stärke und Art der durch die Ankopplung erzwungenen Deformation des einen Kopplungsteils derart zu wählen, dass die daraus resultierende Reibung grösser ist als die Trägheit und Reibung des Körpers, die durch den Antrieb zu überwinden sind.

Da die Kopplungsteile sich mit im wesentlichen gleichbleibendem Querschnitt im wesentlichen parallel zur vorgegebenen Strecke an Körper und Zugmittel erstrecken, ist eine Ankopplung in jeder beliebigen Position möglich, das heisst, dass die Vorrichtung an keinen Takt gebunden ist.

Das Zugmittel der erfindungsgemässen Vorrichtung ist beispielsweise ein Band mit einem über seine Länge im wesentlichen gleichbleibenden Querschnitt. Dadurch, dass das Band mindestens quer zu seiner Länge elastisch deformierbar, beispielsweise komprimierbar ist, ist es gleichzeitig erster Kopplungsteil. Dieses Band ist beispielsweise endlos und mit Hilfe von teils angetriebenen, teils passiven Umlenkrollen entlang der vorgegebenen Strecke angeordnet. Ein an das Band anzukoppelnder Körper weist als zweiten Kopplungsteil eine im wesentlichen parallel zur vorgegebenen Strecke ausrichtbare Nut auf, welche Nut zwei offene Enden hat und einen Querschnitt aufweist, derart, dass ein in der Nut positionierter Längenbereich des Bandes elastisch komprimiert ist. Durch die Kompression des in der Nut positionierten Bandes entstehen gegen die Nutwand gerichtete, elastische Kräfte und dadurch Reibung, die gegen eine Verschiebung des Bandes in Längsrichtung der Nut wirkt.

An einer Ankopplungsstelle werden Band und anzutreibender Körper derart geführt, dass das Band in die Nut des Körpers gedrückt wird. Dafür sind auf der Seite des Bandes und gegebenenfalls auch auf der Seite des Körpers entsprechende Führungsmittel vorzusehen, durch die eine Verschiebung von Band und/oder Körper quer zur vorgegebenen Strecke beschränkt oder verhindert wird.

Für eine Entkopplung des Körpers vom Zugband wird das Band aus der Nut ausgelenkt, wobei wiederum durch entsprechende Führungsmittel dafür gesorgt wird, dass das Band und der Körper bei der Entkopplung nicht in unerwünschter Weise quer zur vorgegebenen Strecke verschoben wird.

Je nach Belastung und Ausführungsform kann das Band den Körper, solange er daran angekoppelt ist, nicht nur antreiben (entlang der vorgegebenen Strecke mitziehen), sondern gegebenenfalls auch tragen und/oder führen. Es können aber auch über die vorgegebene Strecke, über die der Körper am Band angekoppelt bewegt wird, Führungsmittel und/oder tragende Mittel, beispielsweise entsprechende Schienen, auf denen der Körper rollt oder gleitet, vorgesehen sein, derart, dass das Band eine reine Zugfunktion hat.

Das quer zu seiner Länge deformierbare Zugband, das gleichzeitig als Zugmittel und als elastisch deformierbarer erster Kopplungsteil funktioniert, gehört zu einer bevorzugten Ausführungsform der erfindungsgemässen Vorrichtung, wobei die Erfindung aber nicht auf diese Ausführungsform beschränkt ist. Das Zugmittel könnte auch eine Kette sein, deren Glieder einen sich im wesentlichen mit gleichbleibendem Querschnitt über die Kettenlänge erstrekkenden, ersten Kopplungsteil tragen, wobei dieser Kopplungsteil auch verglichen mit der Längsausdehnung des zweiten Kopplungsteils kleine Unterbrechungen aufweisen kann. Anstelle der Kette kann auch eine Reihe von nicht miteinander verbundenen, kraftübertragenden Körpern als Zugmittel vorgesehen sein, welche Körper durch einen entsprechenden Antrieb gegeneinander gestossen werden und wie die genannten Kettenglieder einen ersten, gegebenenfalls mehrfach unterbrochenen Kopplungsteil tragen.

Es ist auch möglich, dass der elastisch deformierbare Kopplungsteil nicht der am Zugmittel angeordnete, erste Kopplungsteil sondern der am anzutreibenden Körper angeordnete, zweite Kopplungsteil ist, während der deformierende Kopplungsteil der am Zugmittel angeordnete, erste Kopplungsteil ist.

Die erfindungsgemässe Vorrichtung dient beispielsweise zu Förderzwecken, wobei die anzutreibenden Körper Förderorgane sind, mit denen ein Fördergut entlang der vorgegebenen Strecke gefördert wird. Dabei handelt es sich um einzelne, voneinander unabhängige Förderorgane, die der Ankopplungsstelle beispielsweise auf einer abfallenden Führung durch die Schwerkraft zugeführt werden, oder um kettenartig miteinander verbundene Förderorgane, die durch vorlaufende Organe, die bereits angetrieben werden, in die Ankopplungsstelle gezogen werden.

Verschiedene, beispielhafte Ausführungsformen der erfindungsgemässen Vorrichtung werden anhand der folgenden Figuren im Detail beschrieben. Dabei zeigen:
- **Figuren 1 und 2**: eine beispielhafte Ausführungsform der erfindungsgemässen Vorrichtung mit einem Zugband, das gleichzeitig Zugmittel und erster Kopplungsteil ist;
- **Figuren 3 bis 5**: verschiedene Ausführungsformen von Kopplungsteilen für die erfindungsgemässe Vorrichtung;
- **Figur 6**: ein Beispiel einer geradlinigen vorgegebenen Strecke, entlang der Körper mit einer Mehrzahl von kooperierenden erfindungsgemässen Vorrichtungen antreibbar sind;
- **Figur 7**: ein Beispiel einer gekrümmten vorgegebenen Strecke, entlang der Körper mit einer erfindungsgemässen Vorrichtung antreibbar sind;
- **Figuren 8 bis 11**: eine beispielhafte Ausführungsform eines auf Schienen gleitenden Körpers in verschiedenen Bereichen einer vorgegebenen Strecke, entlang der ein Körper mittels erfindungsgemässer Vorrichtungen angetrieben wird;
- **Figur 12**: eine weitere beispielhafte Ausführungsform eines auf Schienen gleitenden und mit einer erfindungsgemässen Vorrichtung angetriebenen Körpers;
- **Figur 13**: eine beispielhafte Ausführungsform eines in einem Kanal rollenden und mit einer erfindungsgemässen Vorrichtung angetriebenen Körpers.

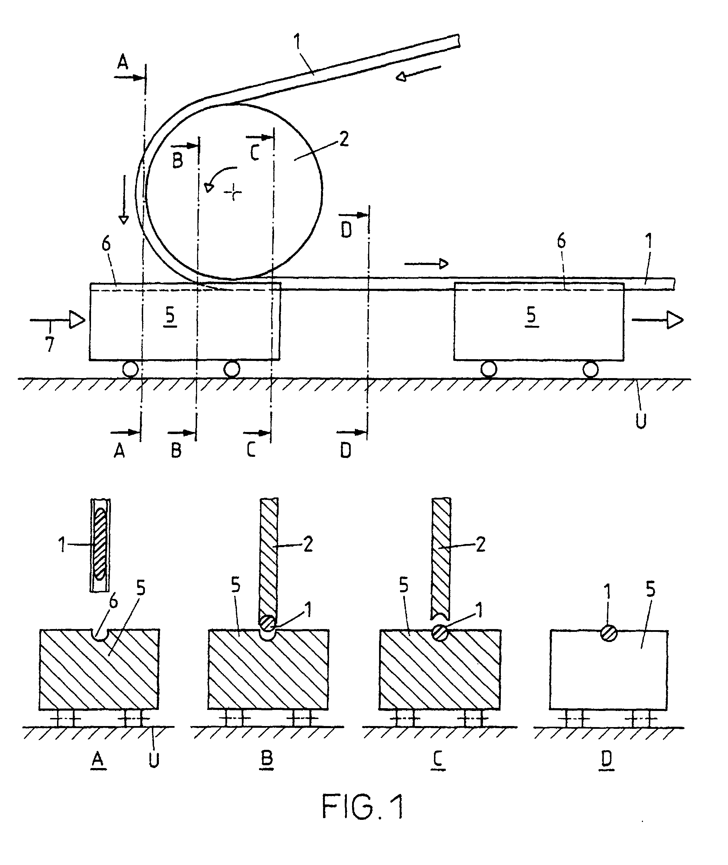

**Figur 1** zeigt mit einem Blickwinkel quer zu einer vorgegebenen Strecke, entlang der Körper anzutreiben sind, eine beispielhafte Ausführungsform der erfindungsgemässen Vorrichtung, wobei im wesentlichen nur eine Ankopplungsstelle und ein erstes Stück der vorgegebenen Strecke dargestellt sind. Die Vorrichtung weist als Zugmittel und als ersten Kopplungsteil ein beispielsweise endloses Zugband 1 auf, das durch eine Umlenkrolle 2, die auch Antriebsrolle sein kann, und durch weitere, nicht dargestellte Umlenkmittel derart geführt und angetrieben ist, dass es nach der Umlenkrolle 2 im wesentlichen parallel zur vorgegebenen Strecke verläuft. Die vorgegebene Strecke ist im vorliegenden Fall eine Bahn (in der Papierebene) auf einer Unterlage U, welche Bahn gegebenenfalls durch Schienen oder andere Führungen (nicht dargestellt) definiert ist. Die Körper sind hier als zweiachsige, auf der Unterlage U verfahrbare Wagen 5 dargestellt.

Die Wagen 5 weisen als zweiten Kopplungsteil eine von vorne bis hinten über ihre Dachfläche verlaufende Nut 6 auf, deren Höhe über der Unterlage U im wesentlichen gleich ist wie die Distanz zwischen Unterlage U und Zugband 1. Durch die Umlenkrolle 2 (Ankopplungsführung) wird das Zugband in die Nut 6 eines gegen die Umlenkrolle bewegten Wagens 5 gedrückt, wobei durch die Unterlage U verhindert wird, dass die Wagen quer zur vorgegebenen Bahn verschoben werden.

Jeder anzutreibende Wagen 5 ist auf der Unterlage U gegen die Umlenkrolle zu bewegen (Pfeil 7) mindestens so weit, bis ein Längsbereich des Zugbandes 1 in der Nut 6 positioniert ist, welcher Längsbereich eine genügende Länge hat, um durch Reibung eine Längsverschiebung zwischen Band und Nutwand zu verhindern. Dies muss spätestens dann der Fall sein, wenn das Zugband 1 über die Länge der Nut 6 in dieser positioniert ist, das heisst, wenn die Hinterkante des Wagens 5 den unteren Scheitelpunkt des Umlenkrades 2 passiert hat.

Die Unterlage U ist in der Figur 1 als horizontale und ebene Fläche dargestellt. Dies ist keine Bedingung für die erfindungsgemässe Vorrichtung, die die Wagen 5 auch auf einer steigenden Unterlage antreiben oder auf einer sinkenden Unterlage bremsen kann.

Eine Entkopplungsstelle für die Ausführungsform der erfindungsgemässen Vorrichtung, wie sie in der Figur 1 dargestellt ist, ist im wesentlichen gleich ausgestaltet wie die dargestellte Ankopplungsstelle, wobei das Zugband 1 und die Wagen 5 sich in entgegengesetzter Richtung bewegen.

Zur Darstellung der Ankopplung sind in der Figur 1 auch Schnitte quer zur vorgegebenen Strecke an den Stellen A (vor der Ankopplungsstelle), B (in der Ankopplungsstelle), C (nach der Ankopplungsstelle) und D (zwischen zwei an das Zugband 1 angekoppelten Wagen 5) dargestellt. Aus diesen Schnitten ist ersichtlich, wie das Zugband I durch die Umlenkrolle 2 in die Nut 6 gepresst wird, während der Wagen 5 durch die Ankopplungsstelle bewegt wird.

Das Zugband 1 besteht vorteilhafterweise aus einem Kunststoffmaterial mit einer geeigneten elastischen Deformierbarkeit. Da Bänder aus derartigen Materialien meist in allen Richtungen gleich elastisch sind, das Band also auch in Längsrichtung streckbar ist, ist das Zugband in einem vorgespannten Zustand zu montieren oder es sind entsprechende Bandspannmittel vorzusehen. Für Anwendungen, in denen eine Längsstreckung des Zugbandes unerwünscht ist, kann ein Band mit einem unelastischen Kern in einem elastisch deformierbaren Mantel verwendet werden. Als unelastisches Zentrum ist ein Drahtseil denkbar, das auch für Anwendungen mit grossen Belastungen vorteilhaft ist.

Es ist offensichtlich, dass anstelle des Zugbandes 1 auch die Nut 6 elastisch deformierbar sein kann.

Für die Ankopplung der Wagen 5 an das Zugband 1 ist eine relative Bewegung zwischen dem Umlenkrad 2, das als Ankopplungsführung für das Zugband 1 dient, und einem anzukoppelnden Körper vorzusehen, das heisst, der Körper muss in die Ankopplungsstelle bewegt werden oder die Ankopplungsführung bewegt sich über einen stillstehenden, anzukoppelnden Körper.

Um eine Ankopplung ohne vorgegebenen Takt zu erlauben, muss das Zugband, wie bereits eingangs erwähnt, einen über seine Länge im wesentlichen gleichbleibenden Querschnitt haben. Querschnittsvariationen, die eine Längenausdehnung haben, die bedeutend kürzer ist als die Längenausdehnung der Nut 6 an den anzutreibenden Körpern (5), bedingen aber keinen Ankopplungstakt. Aus diesem Grunde kann das Zugband auch beispielsweise aus einer Kette gleicher deformierbarer Kugeln mit einem gleichen Radius oder aus anderen, in geeigneter Weise miteinander verbundenen Körpern bestehen.

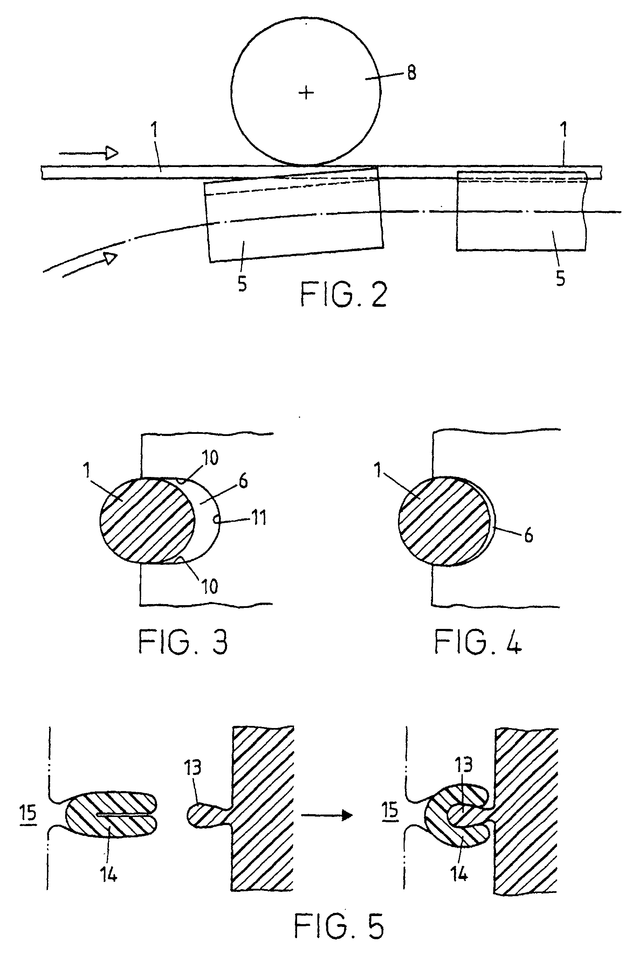

**Figur 2** zeigt als Draufsicht eine weitere, einfache Ausführungsform der erfindungsgemässen Vorrichtung, wiederum mit Wagen 5, die von einem Zugband 1 entlang einer vorgegebenen Strecke (strichpunktierte Linie) antreibbar sind. Im Unterschied zur Figur 1 ist in diesem Falle das Zugband 1 seitlich von den Wagen 5 angeordnet und ist die Ankopplungsstelle nicht gleichzeitig eine Umlenkungsstelle des Zugbandes 1. Das Zugband 1 verläuft im wesentlichen geradlinig durch die Ankopplungsstelle, während die Wagen 5 auf einer gekrümmten Bahn, beispielsweise auf entsprechenden Schienen (nicht dargestellt) gegen die Ankopplungsstelle bewegt werden. Als Ankopplungsführungen dienen eine beispielsweise passiv mit dem Band 1 mitlaufende Rolle 8 und beispielsweise Schienen (nicht dargestellt), auf denen die Wagen 5 verfahrbar sind.

**Figuren 3 bis 5** zeigen in einem grösseren Massstab verschiedene, beispielhafte Ausführungsformen von Kopplungsteilen für die erfindungsgemässe Vorrichtung.

**Figur 3** zeigt ein Zugband 1, das gleichzeitig Zugmittel und erster Kopplungsteil ist und einen im wesentlichen runden Querschnitt hat. Die als zweiter Kopplungsteil funktionierende Nut 6 hat einen Querschnitt mit parallel zueinander verlaufenden Seitenwänden 10 und einen etwa halbkreisförmigen Grund 11. Der Abstand zwischen den parallelen Seitenwänden 10 ist dabei kleiner als der Durchmesser des Zugbandes 1. Wenn das Zugband in die Nut 6 gedrückt wird, wird wie dargestellt das Zugband 1 in Nutquerrichtung komprimiert oder aber ein nicht komprimierbares Zugband deformiert die Nutwände.

Das Zugband 1 der **Figur 4** hat ebenfalls einen im wesentlichen runden Querschnitt. Die Nut 6 hat einen Querschnitt, der im wesentlichen einem Kreissegment mit einem Winkel von mehr als 180° entspricht, derart, dass die Nutöffnung etwas weniger breit ist als das Innere der Nut. Auch in diesem Falle ist die grösste Nutbreite etwas kleiner als der Durchmesser des Zugbandes 1, derart, dass das in der Nut 6 positionierte Band 1 komprimiert ist. Die Verengung der Nutöffnung bildet einen Formschluss, durch den das Zugband 1 in der Nut 6 gehalten wird, sodass das System kleine, das Band 1 aus der Nut 6 ziehende Kräfte (senkrecht zur Bewegungsrichtung gerichtete Kräfte) aufnehmen kann. Ein derartiger Formschluss trägt aber in keiner Weise zum Reibschluss bei, durch den eine Längsverschiebung zwischen Zugband 1 und Nut 6 verhindert wird.

**Figur 5** zeigt ein weiteres Paar von Kopplungsteilen 13 und 14. Der Kopplungsteil 13 hat die Form eines Kammes und ist beispielsweise als zweiter Kopplungsteil an einem anzutreibenden Körper angeordnet. Der andere Kopplungsteil 14 dient beispielsweise als erster Kopplungsteil und ist ein geschlitztes Zugband 14, kann aber auch, wie strichpunktiert angedeutet ist, ein an einem anderen Zugmittel 15 (z.B. Zugkette oder Reihe von voneinander getrennten kraftübertragenden Körpern) angeordneter, nutartig ausgestalteter Kopplungsteil sein. Von dem in der Figur 5 dargestellten Paar von Kopplungsteilen 13 und 14 ist der nutartige offensichtlich elastisch deformierbar, während der kammförmige der deformierende Kopplungsteil ist. Es geht aber klar aus der Figur 5 hervor, dass nicht nur das deformierbare bzw. deformierende Merkmal sondern auch die Funktion als erster bzw. zweiter Kopplungsteil beliebig vertauschbar sind.

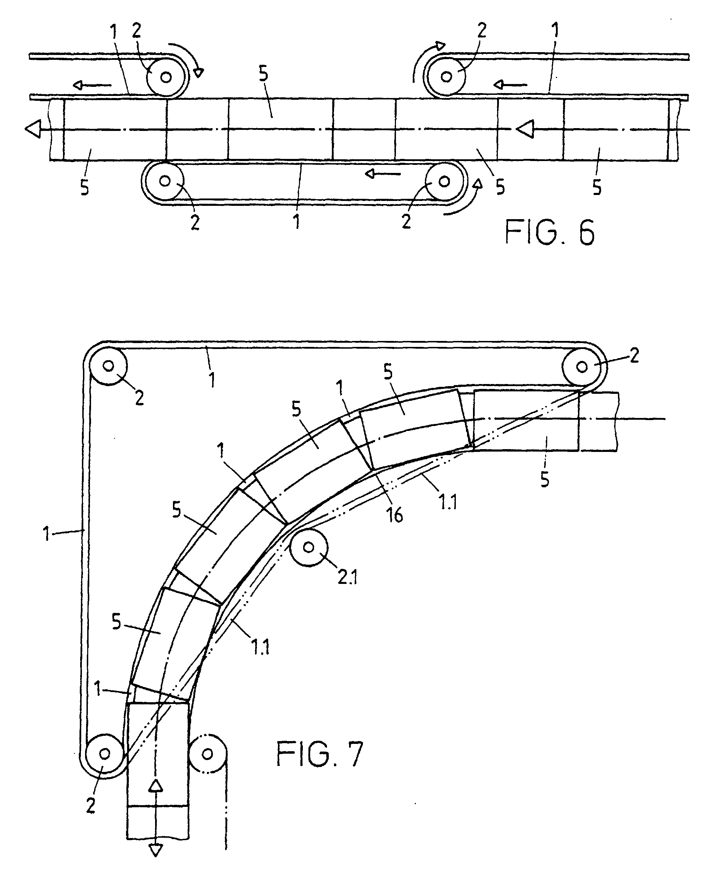

**Figur 6** zeigt eine vorgegebene Strecke (strichpunktierte Linie mit Pfeil), auf der Wagen 5 (oder andere, anzutreibende Körper) durch eine Serie von nacheinander, abwechselnd auf der einen und der anderen Seite der vorgegebenen Strecke angeordneten Zugbändern 1 angetrieben werden. Die Zugbänder 1 kooperieren beispielsweise mit Nuten (nicht dargestellt), die entlang den beiden Seitenwänden der Wagen 5 verlaufen. Ankopplungsstellen und Entkopplungsstellen sind Stellen, an denen die Zugbänder durch Umlenkrollen 2 um beispielsweise 180° umgelenkt werden. Die Umlenkrollen 2 dienen dabei als Ankopplungsführungen bzw. Entkopplungsführungen, wie dies im Zusammenhang mit der Figur 1 bereits beschrieben wurde. Dadurch, dass je zwei Umlenkrollen 2 von zwei versetzt aufeinanderfolgenden Antrieben einander genau gegenüberliegend angeordnet sind, übernehmen sie gleichzeitig die Führung des Zugmittels (Zugband 1) und der anzutreibenden Körper (Wagen 5) durch die An- bzw. Entkopplungsstellen und verhindern ein Verschieben von Zugmittel und/oder Körper quer zur vorgegebenen Strecke.

Die Zugbänder 1 können durch je einen eigenen Motor (nicht dargestellt) über eine der Umlenkrollen 2 angetrieben werden. Es ist auch denkbar, eine Mehrzahl derartiger Antriebe mit einem gemeinsamen Motor anzutreiben, wobei die einander gegenüberliegenden Umlenkrollen 2 beispielsweise über zwei Zahnräder miteinander wirkverbunden sind. Da die Funktionen von Ankopplungsstelle und Entkopplungsstelle gegengleich sind, kann die Antriebsrichtung einer Einrichtung, wie sie in der Figur 6 dargestellt ist, jederzeit umgekehrt werden, wozu lediglich die Antriebsrichtung der Zugbänder 1 umzukehren ist.

**Figur 7** zeigt eine gekrümmte, vorgegebene Strecke (als strichpunktierte Linie dargestellt), auf der wiederum Wagen 5 auf Schienen oder durch andere geeignete Führungen (durch Linie 16 dargestellt) geführte Körper mit Hilfe einer erfindungsgemässen Vorrichtung anzutreiben sind. Das als Zugmittel funktionierende Zugband 1 ist seitlich von den Wagen 5 auf der äusseren Seite der Streckenkrümmung angeordnet. Umlenkrollen 2 dienen als Ankopplungsführung und als Entkopplungsführung für das Zugband 1, die als einfache Linie dargestellte Führung 16 als Führungsmittel für die Wagen 5. Das Band, das zwischen den Umlenkrollen 2 beispielsweise in zwei geradlinigen Stücken um eine weitere Umlenkrolle 2.1 verläuft (strichpunktierter, mit 1.1 bezeichneter Bandverlauf), wenn keine Wagen 5 auf der gekrümmten Strecke unterwegs sind, wird von einer geschlossenen Reihe von Wagen 5, wie sie dargestellt ist, auf einen Verlauf im wesentlichen parallel zur vorgegebenen Strecke gezwungen, wobei auch hier die Führung 16 eine Verschiebung der Wagen 5 quer zur vorgegebenen Strecke verhindert. Je nach Längselastizität des Bandes 1 ist die Längendifferenz zwischen dem Bandverlauf 1 und dem Bandverlauf 1.1 durch einen Bandspanner zu kompensieren oder nicht.

Je nach Anordnung der vorgegebenen Strecke und je nach Ausgestaltung der Kopplungsteile ist der Bandverlauf 1.1 ohne anzutreibende Körper durch mehr oder weniger zusätzliche Umlenkrollen (2.1) mehr oder weniger an den Verlauf der vorgegebenen Strecke anzupassen.

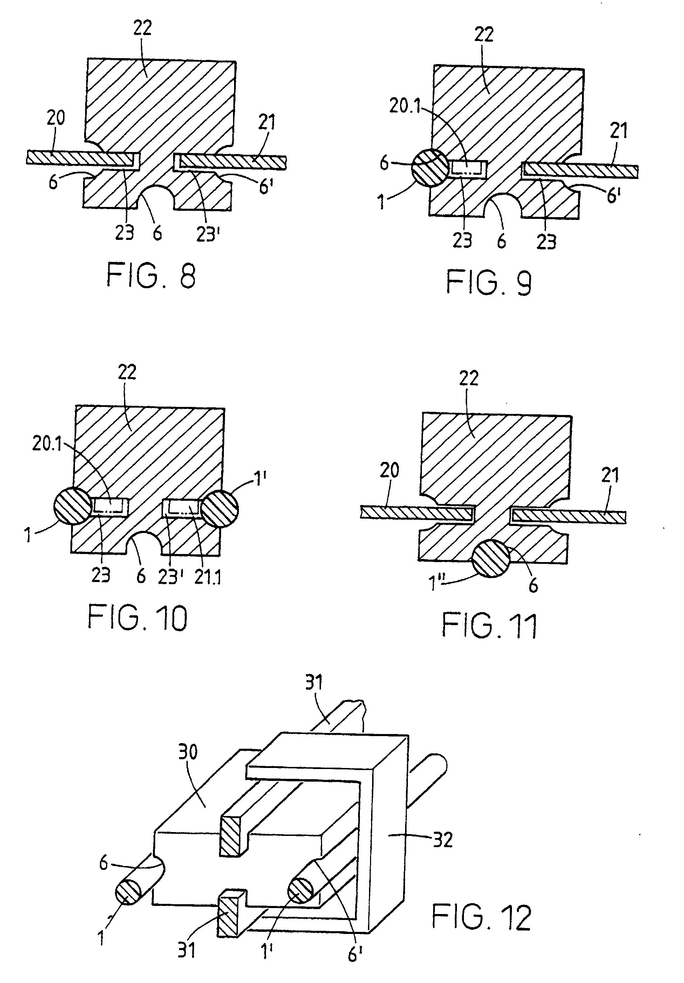

**Figuren 8 bis 11** zeigen einen mindestens auf Teilen einer vorgegebenen Strecke auf Schienen 20 und 21 gleitenden Körper 22, der mittels verschiedener beispielsweise als Zugbänder 1 ausgestalteter Zugmittel antreibbar ist. Alle Figuren sind Schnitte durch den Körper 22 und durch die Schienen 20 und 21 (bzw. 20.1 und 21.1) quer zu einer vorgegebenen Strecke, entlang der der Körper 22 anzutreiben ist. Der Körper 22 ist sehr schematisch als einfacher Block dargestellt. Er kann aber für verschiedenste Förderfunktionen beispielsweise mit Greiforganen, mit einer Ladefläche, mit einem Lade-Innenraum oder mit ähnlichen Mitteln versehen sein. Der Körper 22 kann aber auch andere Funktionen haben als Förderfunktionen: beispielsweise eine Positionierungsfunktion, die durch Hin- und Herschieben des Körpers wahrgenommen wird, oder eine Kraftübertragungsfunktion.

**Figur 8** zeigt den Körper 22 auf einem Streckenstück, auf dem er beispielsweise keinen externen Antrieb braucht, beispielsweise auf einem abfallenden Streckenstück, auf dem er durch die eigene Schwerkraft angetrieben wird. Der Körper 22 gleitet auf den oberen Flächen der Schienen 20 und 21, die ihn tragen und dadurch, dass sie in seitliche Führungsnuten 23 und 23' auf beiden Seiten des Körpers 22 eingreifen, ihn auch seitlich führen.

**Figur 9** zeigt den Körper 22 auf einem Stück der vorgegebenen Strecke auf dem er durch ein auf seiner linken Seite angeordnetes Zugband 1 angetrieben wird. Das Zugband 1 hat einen im wesentlichen runden Querschnitt und ist im Aussenbereich der Führungsnut 23 eingedrückt, welcher Aussenbereich erweitert ist und eine Nut 6 bildet, wie sie in der Figur 3 dargestellt ist. Der Körper 22 gleitet dabei auf der rechten Schiene 21 wie in Figur 8, wird aber links durch das Zugband 1 nicht nur angetrieben sondern auch getragen. Dadurch wird die Gleitreibung des Körpers 22 reduziert und erübrigt sich die linke Schiene 20. Diese linke Schiene kann aber auf einem derartigen Strekkenbereich, insbesondere im Bereich von Ankopplungsstellen oder Entkopplungsstellen im Inneren der Nut 23 weiterlaufen (strichpunktiert dargestellt und mit 21.1 bezeichnet).

Für die Ankopplung bzw. Entkopplung wird das Zugband 1, wie bereits beschrieben, beispielsweise durch eine Umlenkrolle an den Körper 22 oder von ihm weg gelenkt. An einer Ankopplungsstelle zur Ankopplung des Körpers 22 an das in der Figur 9 dargestellte Zugband 1 verhindert die rechte Schiene 21 eine Querverschiebung des Körpers 22, welche rechte Schiene im Entkopplungshereich im Innern der Führungsnut 23 verläuft (20.1).

**Figur 10** zeigt den Körper 22 an einer Stelle, an der er beidseitig durch Zugbänder 1 und 1' angetrieben wird und zwar in der gleichen Art, wie dies für die linke Seite bereits im Zusammenhang mit der Figur 9 beschrieben ist. Wenn die beiden Zugbänder 1 und 1' das ganze Gewicht des Körpers 22 zu tragen vermögen und auch in einer dazu geeigneten Weise angeordnet sind, sind die beiden Schienen 20 und 21 nur an Ankopplungsstellen und Entkopplungsstellen im Innern der Führungsnuten 23 und 23' verlaufend (20.1, 21.1) notwendig.

**Figur 11** zeigt den Körper 22 auf einem Streckenbereich, auf dem er durch ein in einer unteren Nut 6 positioniertes Zugband 1" angetrieben wird. Der Körper 22 wird durch das Zugband auch getragen, sodass der Körper auf den Schienen 20 und 21 nicht oder nur leicht aufliegt, wobei die Schienen 20 und 21 aber weiter die seitliche Führung übernehmen. Zur Ankopplung und Entkopplung an und von dem unteren Zugband 1" dienen wiederum beispielsweise Umlenkrollen als Ankopplungsführung bzw. Entkopplungsführung und führen die Schienen 20 und 21 den Körper 22. Es ist auch vorstellbar, dass für die Ankopplung das Gewicht des Körpers 22 als einziges Gegenhaltemittel gegen den Druck des Zugbandes genügt.

Der anzutreibende Körper 22 der Figuren 8 bis 11 ist derart dargestellt, dass die Schienen 20 und 21 in seitlich an ihm angeordneten Nuten laufen. Es ist offensichtlich, dass die Schienen 20 und 21 und damit auch der Körper 22 eine gegenüber der Schwerkraft andere Lage haben können. Dies bedeutet mit anderen Worten, dass eine für den Körper 22 vorgegebenen Strecke auch Verdrehungen aufweisen kann.

**Figur 12** zeigt einen weiteren anzutreibenden Körper 30. Dieser wird geführt durch eine obere und eine untere Schiene 31, die beide von Haltern 32 gehalten werden und die in einer oberen und einer unteren Nut des Körpers 30 verlaufen. Seitliche Nuten 6 und 6' dienen als zweite Kopplungsteile kooperierend mit Zugbändern bzw. ersten Kopplungsteilen 1 und 1'. Für die Funktion des Antriebes sowie für die Ankopplung des Körpers 30 an die Zugbänder 1 und seine Entkopplung ist die Beschreibung der Figuren 8 bis 11 entsprechend anzuwenden.

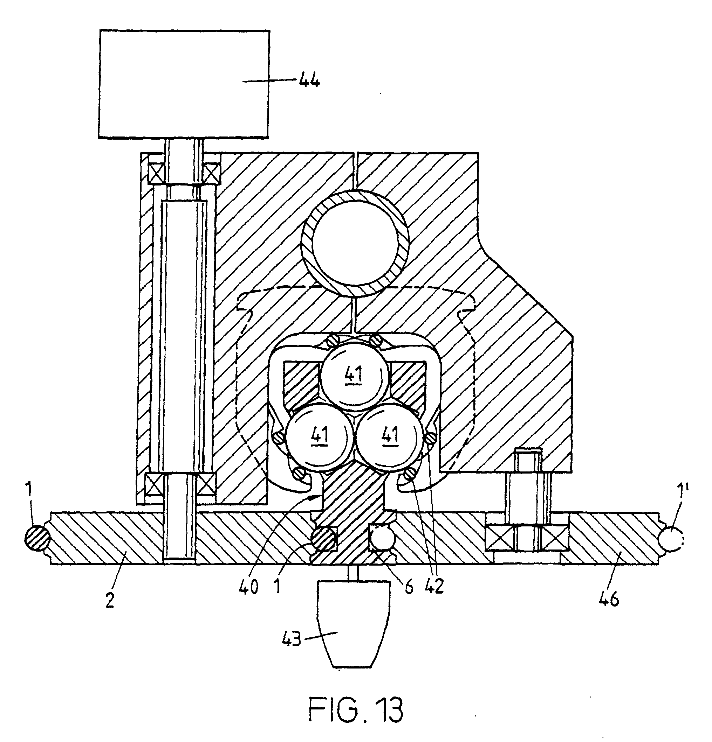

**Figur 13** zeigt mit etwas mehr Details eine weitere, beispielhafte Ausführungsform der erfindungsgemässen Vorrichtung, die wiederum im Schnitt quer zu einer vorgegebenen Strecke dargestellt ist. Das Zugmittel, das gleichzeitig erster Kopplungsteil ist, ist wiederum als Zugband 1 ausgestaltet. Der anzutreibende Körper 40 rollt mit Hilfe von Dreiergruppen von Kugeln 41 auf sechs Schienen 42, die zusammen einen entlang der vorgegebenen Strecke verlaufenden Führungskanal bilden oder in einem solchen angeordnet sind. Der anzutreibende Körper 40 weist einen aus dem Führungskanal ragenden Teil auf, an dem beidseitig parallel zum Führungskanal ausgerichtete Nuten 6 angeordnet sind und der beispielsweise ein Greiforgan 43 trägt.

Der in der Figur 13 dargestellte Schnitt geht durch eine Ankopplungsstelle bzw. Entkopplungsstelle, in der auf der linken Seite das Zugband 1 in die Nut 6 gepresst bzw. aus dieser gezogen wird. Dabei dient eine durch einen Motor 44 angetriebene Umlenkrolle 2 als An- bzw. Entkopplungsführung für das Zugband 1 und eine passiv mitlaufende Rolle 46 als gegenhaltendes Führungsmittel. Die gegenhaltende Rolle 46 kann im Sinne einer Anordnung, wie sie in der Figur 6 dargestellt ist, ebenfalls eine Umlenkrolle für ein weiteres, auf der anderen Seite des anzutreibenden Körpers 40 wirkendes Zugband 1' sein, wie dies strichpunktiert dargestellt ist.

Die gegenhaltende Umlenkrolle 46 kann auch auf ihrem ganzen Umfang ein Zugband 1' aufweisen, wobei sie dann eine entartete Form der erfindungsgemässen Vorrichtung darstellt, in der die vorgegebene Strecke theoretisch keine Länge aufweist und die Ankopplungsstelle mit der Entkopplungsstelle zusammenfällt.

Der auf Dreiergruppen von Kugeln 41 rollende Körper 40 und entsprechende Führungskanäle sind in der Publikation EP-0387318 (bzw. US-5074678) beschrieben.

## Patentansprüche

1. Vorrichtung zum Antreiben mindestens eines Körpers (5, 22, 30, 40) entlang einer vorgegebenen Strecke mit Hilfe eines Zugmittels (1, 15), das entlang der vorgegebenen Strecke angeordnet ist und an das der Körper (5, 22, 30, 40) in einer Ankopplungsstelle mit Hilfe eines Kopplungsmittels ankoppelbar ist,
wobei das Kopplungsmittel aus einem ersten, am Zugmittel (15) angeordneten oder das Zugmittel (1) bildenden Kopplungsteil (1, 14) und einem zweiten, an dem mindestens einen Körper (5, 22, 30, 40) angeordneten Kopplungsteil (6, 13) besteht,
wobei sich der erste Kopplungsteil (1,14) mit im wesentlichen gleichbleibendem Querschnitt und im wesentlichen parallel zur vorgegebenen Strecke über die vorgegebene Strecke erstreckt,
wobei der eine der Kopplungsteile (1, 14) quer zur vorgegebenen Strecke elastisch deformierbar ist und der andere Kopplungsteil (6, 13) als deformierender Kopplungsteil ausgebildet ist, derart, dass er, wenn er gegen den elastisch deformierbaren Kopplungsteil (1,14) gedrückt wird, diesen unter Bildung eines Reibschlusses zwischen den beiden Kopplungsteilen deformiert,
und wobei an der Ankopplungsstelle Führungsmittel (2, 8, 16, 20, 21, 31, 46) vorgesehen sind, mit deren Hilfe das Zugmittel (1,15) und der mindestens eine Körper (5, 22, 30, 40) derart gegeneinander führbar sind, dass der erste und der zweite Kopplungsteil (1/6,13/14) gegeneinander gedrückt und reibschlüssig miteinander verbunden werden,
**dadurch gekennzeichnet,**
**dass** sich der zweite Kopplungsteil (6,13) auf den ersten Kopplungsteil (1,14) ausgerichtet, im wesentlichen parallel zur vorgegebenen Strecke und mit einem gleichbleibenden Querschnitt über den mindestens einen Körper (5, 22, 30, 40) oder einen Teil davon erstreckt,

2. Vorrichtung nach Anspruch 1, **dadurch gekennzeichnet, dass** zur Entkopplung des mindestens einen Körpers (5, 22, 30, 40) in einer Enkopplungsstelle Führungsmittel vorgesehen sind, um den ersten und den zweiten Kopplungsteil (1/6, 13/14) voneinander zu ziehen und dadurch voneinander zu trennen.

3. Vorrichtung nach Anspruch 1 oder 2, **dadurch gekennzeichnet, dass** das Zugmittel selbst als erster Kopplungsteil ausgebildet ist und die Form eines Zugbandes (1, 14) aufweist, das quer zu seiner Länge elastisch deformierbar ist.

4. Vorrichtung nach einem der Ansprüche 1 bis 3, **dadurch gekennzeichnet, dass** der erste Kopplungsteil ein auch als Zugmittel dienendes Zugband (1) oder ein an einem anderen Zugmittel angeordneter, kammförmiger Kopplungsteil ist und dass der zweite Kopplungsteil eine Nut (6) mit zwei offenen Enden ist, in der der erste Kopplungsteil in einem komprimierten Zustand positionierbar ist.

5. Vorrichtung nach Anspruch 4, **dadurch gekennzeichnet, dass** das Zugband (1) einen im wesentlichen runden Querschnitt aufweist und dass die Nut (6) eine Breite aufweist, die kleiner ist als der Durchmesser des Bandquerschnittes.

6. Vorrichtung nach einem der Ansprüche 1 bis 5, **dadurch gekennzeichnet, dass** das Zugmittel (1, 15) endlos ist und dass es in der Ankopplungsstelle und/oder in der Entkopplungsstelle durch eine Umlenkrolle (2) geführt ist.

7. Vorrichtung nach einem der Ansprüche 1 bis 6, **dadurch gekennzeichnet, dass** der mindestens eine Körper (5, 22, 30, 40) in der Ankopplungsstelle und/oder in der Entkopplungsstelle durch eine Unterlage (U), das Gewicht der Körpers (22), durch eine Führung (16), durch Schienen (20.1, 21.1) oder durch eine Umlenkrolle (2, 46) eines gegenüber dem Zugmittel angeordneten, weiteren Zugmittels (1') geführt ist.

8. Vorrichtung nach einem der Ansprüche 1 bis 7, **dadurch gekennzeichnet, dass** zur Führung und/oder zum Tragen des mindestens einen Körpers (22, 30, 40) über mindestens einen Teil der vorgegebenen Strecke Schienen (20, 21, 31) vorgesehen sind.

9. Vorrichtung nach Anspruch 8, **dadurch gekennzeichnet, dass** der Körper (22) zwei einander gegenüberliegende Führungsnuten (23) für Schienen (20, 21) aufweist und dass die Aussenbereiche der Führungsnuten (23) als Nuten (6) für Zugbänder (1) oder andere erste Kopplungsteile ausgestaltet sind.

10. Vorrichtung nach Anspruch 9, **dadurch gekennzeichnet, dass** auf Streckenbereichen, auf denen der Körper (22) mindestens auf seiner einen Seite an einem Zugband (1) angekoppelt ist, Schienenteile (20.1, 21.1) sich innerhalb des Zugbandes (1) in der Führungsnut (23) erstrecken.

11. Vorrichtung nach Anspruch 8, **dadurch gekennzeichnet, dass** der Körper (40) Dreiergruppen von Kugeln (41) aufweist, die je auf einem Paar von Schienen (42) eines Führungskanals abrollen, und dass der Körper (40) einen aus dem Führungskanal ragenden Teil aufweist, an dem ein zweiter Kopplungsteil zum Ankoppeln an ein Zughand (1, 14) bzw. an einen ersten Kopplungsteil angeordnet sind.

12. Vorrichtung nach einem der Ansprüche 1 bis 11, **dadurch gekennzeichnet, dass** die vorgegebene Strecke Steigungen, Senkungen, Krümmungen und/oder Verdrehungen aufweist.

## Claims

1. Device for driving at least one body (5, 22, 30, 40) along a predetermined course with the aid of a hauling means (1, 15) arranged along the predetermined course and to which the body (5, 22, 30, 40) is couplable in a coupling location with the aid of a coupling means
wherein the coupling means consists of a first coupling element (1,14) arranged on the hauling means (15) or forming the hauling means (1) and a second coupling element (6,13) arranged on the at least one body (5, 22, 30, 40),
wherein the first coupling element (1,14) extends over the predetermined course substantially in parallel to it with a substantially constant cross-section,
wherein one of the coupling elements (1, 14) is elastically deformable perpendicular to the predetermined course and the other coupling element (6, 13) is designed to deform the deformable coupling element on pressing the coupling elements against each other such causing a friction-type locking between the two coupling elements,
and wherein guide means (2, 8, 16, 20, 21, 31, 46) are provided in the coupling location for guiding the hauling means (1, 15) and the at least one body (5, 22, 30, 40) towards each other in a manner that the first and second coupling elements (1/6, 13/14) are pressed against each other thus being connected by means of friction-type locking
**characterized in that**
the second coupling element (6,13) extends with a constant cross-section over the at least one body (5, 22, 30, 40) or part thereof in alignment with the first coupling element (1,14) and substantially parallel to the predetermined course.

2. Device according to claim 1, **characterized in that** in a de-coupling location, for de-coupling the at least one body (5, 22, 30, 40) from the hauling means, guide means are provided for pulling the first and second coupling elements (1/16, 13/14) apart and thus separating them.

3. Device according to claim 1 or 2, **characterized in that** the hauling means itself is designed as first coupling element and has the form of a hauling tape (1, 14) which is elastically deformable perpendicular to its length.

4. Device according to one of claims 1 to 3, **characterized in that** the first coupling element is a hauling tape (1) also serving as hauling means or is a coupling element in the form of a ridge arranged on the hauling means and that the second coupling element is a groove (6) with two open ends in which the first coupling element is positionable in a compressed state.

5. Device according to claim 4, **characterized in that** the hauling tape (1) has a substantially circular cross-section and that the groove (6) has a width which is smaller than the diameter of the tape cross-section.

6. Device according to one of claims 1 to 5, **characterized in that** the hauling means (1, 15) is endless and that it is guided over a deflection roller (2) in the coupling and/or de-coupling location.

7. Device according to one of claims 1 to 6, **characterized in that** in the coupling and/or in the de-coupling location, the at least one body (5, 22, 30, 40) is guided by a support (U), by the weight of the body (22), by a guide (16), by rails (20.1, 21.1) or by a deflection roller (2, 46) of a further hauling means (1') arranged opposite the hauling means.

8. Device according to one of claims 1 to 7, **characterized in that** for guiding and/or supporting the at least one body (22, 30, 40) along at least one part of the predetermined course, rails (20,21,31) are provided.

9. Device according to claim 8, **characterized in that** the body (22) comprises two opposite guiding grooves (23) for rails (20, 21) and that the exterior regions of the guiding grooves (23) are designed as grooves (6) for hauling tapes (1) or other first coupling elements.

10. Device according to claim 9, **characterized in that** in parts of the course along which the body (22) is coupled to a hauling tape (1) on its one side, rail elements (20.1, 21.1) extend inside the hauling tape (1) in the guiding groove (23).

11. Device according to claim 8, **characterized in that** the body (40) comprises groups of three balls (41) which each roll on a pair of rails (42) of a guiding channel and that the body (40) comprises a part protruding from the guiding channel on which part a second coupling element for coupling to a hauling tape (1,14) or to a first coupling element are arranged.

12. Device according to one of claims 1 to 11, **characterized in that** the predetermined course comprises gradients and curves and/or torsions.

## Revendications

1. Dispositif destiné à l'entraînement d'au moins un corps (5, 22, 30, 40) le long d'un parcours prédéterminé à l'aide d'un moyen de traction (1, 15), qui est disposé le long du parcours prédéterminé, et auquel le corps (5, 22, 30, 40) peut être couplé au niveau d'un emplacement de couplage à l'aide d'un moyen de couplage,
le moyen de couplage étant constitué d'un premier élément de couplage (1, 14) disposé sur le moyen de traction (15) ou constituant le moyen de traction (1), et d'un deuxième élément de couplage (6, 13) disposé sur un corps (5, 22, 30, 40) au moins,
le premier élément de couplage (1, 14) s'étendant sur le parcours prédéterminé avec une section transversale sensiblement constante, et pour l'essentiel parallèlement au parcours prédéterminé,
l'un des éléments de couplage (1, 14) pouvant être déformé élastiquement transversalement au parcours prédéterminé, et l'autre élément de couplage (6, 13) étant agencé sous la forme d'un élément de couplage de déformation de telle sorte que, lorsque qu'il est poussé contre l'élément de couplage (1, 14) pouvant être déformé élastiquement, il déforme ce dernier en engendrant une liaison par friction entre les deux éléments de couplage, et
des moyens de guidage (2, 8, 16, 20, 21, 31, 46) étant prévus au niveau de l'emplacement de couplage, à l'aide desquels le moyen de traction (1, 15) et un corps (5, 22, 30, 40) au moins peuvent être guidés l'un vers l'autre de telle sorte que le premier et le deuxième élément de couplage (1/6, 13/14) soient poussés l'un contre l'autre, et reliés entre eux par friction,
**caractérisé en ce que**
le deuxième élément de couplage (6, 13) est orienté vers le premier élément de couplage (1, 14), s'étend pour l'essentiel parallèlement au parcours prédéterminé et avec une section transversale constante sur un corps (5, 22, 30, 40) au moins, ou une partie de celui-ci.

2. Dispositif selon la revendication 1, **caractérisé en ce que**, pour le découplage d'un corps (5, 22, 30, 40) au moins au niveau d'un emplacement de découplage, des moyens de guidage sont prévus afin d'écarter les premier et deuxième éléments de couplage (1/6, 13/14) l'un de l'autre, et les dissocier ainsi l'un de l'autre.

3. Dispositif selon la revendication 1 ou 2, **caractérisé en ce que** le moyen de traction lui-même est agencé en tant que premier élément de couplage, et présente la forme d'une bande de traction (1, 14) qui peut être déformée élastiquement transversalement à sa longueur.

4. Dispositif selon l'une quelconque des revendications 1 à 3, **caractérisé en ce que** le premier élément de couplage est une bande de traction (1) servant également de moyen de traction ou un élément de couplage en forme de peigne disposé sur un autre moyen de traction, et **en ce que** le deuxième élément de couplage est une rainure (6) avec deux extrémités ouvertes, dans laquelle le premier élément de couplage peut être positionné à l'état comprimé.

5. Dispositif selon la revendication 4, **caractérisé en ce que** la section transversale de la bande de traction (1) est sensiblement circulaire, et **en ce que** la largeur de la rainure (6) est inférieure au diamètre de la section transversale de la bande.

6. Dispositif selon l'une quelconque des revendications 1 à 5, **caractérisé en ce que** le moyen de traction (1, 15) est sans fin, et **en ce qu'**il est guidé par une poulie de renvoi (2) au niveau de l'emplacement de couplage et/ou de l'emplacement de découplage.

7. Dispositif selon l'une quelconque des revendications 1 à 6, **caractérisé en ce que**, au niveau de l'emplacement de couplage et/ou de l'emplacement de découplage, un corps (5, 22, 30, 40) au moins est guidé par un support (U), le poids du corps (22) est guidé par un guidage (16), des rails (20.1, 21.1) ou par une poulie de renvoi (2, 46) d'un autre moyen de traction (1') disposé en face du moyen de traction.

8. Dispositif selon l'une quelconque des revendications 1 à 7, **caractérisé en ce que** des rails (20, 21, 31) sont prévus sur une partie au moins du parcours prédéterminé pour le guidage et/ou le support d'un corps (22, 30, 40) au moins.

9. Dispositif selon la revendication 8, **caractérisé en ce que** le corps (22) comporte deux rainures de guidage (23) opposées l'une à l'autre pour des rails (20, 21), et **en ce que** les zones extérieures des rainures de guidage (23) sont agencées sous la forme de rainures (6) destinées à des bandes de traction (1) ou à d'autres premiers éléments de couplage.

10. Dispositif selon la revendication 9, **caractérisé en ce que**, sur des zones du parcours sur lesquelles le corps (22) est couplé à une bande de traction (1) sur l'un au moins de ses côtés, des tronçons de rail (20.1, 21.1) s'étendent dans la rainure de guidage (23) à l'intérieur de la bande de traction (1).

11. Dispositif selon la revendication 8, **caractérisé en ce que** le corps (40) comporte des triades de billes (41) qui roulent sur un couple de rails (42) d'un canal de guidage, et **en ce que** le corps (40) comporte une partie faisant saillie du canal de guidage sur laquelle est disposé un deuxième élément de couplage pour le couplage à une bande de traction (1, 14) ou à un premier élément de couplage.

12. Dispositif selon l'une quelconque des revendications 1 à 11, **caractérisé en ce que** le parcours prédéterminé comporte des montées, des descentes, des courbes et/ou des torsions.
